# FASCICULE DE BREVET EUROPEEN

(11) **EP 1 757 828 B1**
(45) Date de publication et mention de la délivrance du brevet: **03.12.2008**
(21) Numéro de dépôt: 06300783.5
(22) Date de dépôt: 10.07.2006
(51) Int. Cl.: F16C 35/077, F16C 35/067

(54) **Dispositif d'arrêt de système de roulement et procédé de montage**
Feststellvorrichtung für Lagersystem und Montageverfahren
Stopping device for a bearing system and mounting method

(30) Priorité: 23.08.2005 FR 0552550
(43) Date de publication de la demande: 28.02.2007
(73) Titulaire: RENAULT S.A.S., 92100 Boulogne Billancourt (FR)
(72) Inventeur: Leheu, Patrice, 27340 Marmot (FR); Puissant, Romain, 27310 Bourg-Achard (FR)
(74) Mandataire: Rougemont, Bernard

(56) Documents cités:
- EP-A- 1 205 680
- DE-A1- 10 032 474
- DE-A1- 19 860 345
- FR-A- 2 729 442
- GB-A- 1 376 534
- US-A1- 2003 099 419

## Description

La présente invention concerne le montage et l'immobilisation d'un système de roulement d'arbre dans une structure rigide, telle qu'un carter de boîte de vit esses.

Plus précisément, elle concerne un dispositif d'arrêt axial d'un système de roulement d'un organe tournant dans une structure rigide, comprenant un élément d'arrêt en appui entre le système de roulement et un épaulement de la structure, et un procédé de montage de roulement.

Les arbres tournants de boîte de vitesses, sont supportés à leurs extrémités dans le carter de la boîte, par des systèmes de roulement assurant leur guidage en rotation et la reprise des efforts dans un palier intégré au carter. On connaît divers types de roulement, comprenant un ensemble de billes, aiguilles, de rouleaux ou autres, qui sont retenus entre deux bagues. Dans les boîtes de vitesses, on utilise volontiers des roulements du type douille à rouleaux, comprenant une cage extérieure en tôle roulée et une cage intérieure de maintien des rouleaux en matériau plastique, tel que du polyamide.

Un problème général lié au montage des roulements d'arbre dans les boîtes de vitesses, ou dans tout autre type de structure fixe, est celui du cheminement axial du roulement dans son palier, lorsqu'il n'est pas immobilisé dans celui-ci. Dans les boîtes de vitesses, le cheminement du roulement dans son palier peut notamment se terminer par sa chute à l'intérieur du carter, et entraîner des détériorations très importantes du mécanisme interne de la boîte.

Par la publicat ion GB 1 376 534, on connaît un système d'arrêt de roulement dans son palier, qui comporte une plaque d'immobilisation axiale coincée contre une encoche de la bague extérieure du roulement, et vissée sur le palier. La bague extérieure de roulement est ici suffisamment massive, pour qu'on puisse ménager dans celle-ci une encoche capable de retenir une plaque ou un quelconque élément d'arrêt, ce qui est impossible sur une bague de roulement plus mince, telle qu'une cage en tôle roulée. Une disposition analogue est donc difficilement applicable avec une cage extérieure de roulement relativement mince, par exemple en tôle roulée.

La présente invention vise à supprimer les problèmes de cheminement d'un système de roulement dans son palier, grâce à des dispositions applicables quelle que soit la nature et l'épaisseur des cages de roulement concernées.

Dans ce but, elle propose que l'élément d'arrêt comporte un ressort assurant le plaquage d'un élément d'arrêt contre le système de roulement.

Selon un mode de réalisation particulier de l'invention, cet élément est composé d'une plaquette en appui contre le système de roulement, et du ressort fixé sur celle-ci.

L'invention concerne aussi un procédé de montage d'un dispositif d'arrêt axial de douille à rouleaux dans un palier d'arbre tournant de boîte de vitesses, selon lequel ce dispositif est plaqué élastiquement par un ressort contre la douille à rouleaux, lors de son serrage définitif sur le carter de la boîte.

Au montage, on immobilise axialement le roulement dans son palier au moyen de la plaquette d'arrêt plaquée élastiquement par le ressort contre le roulement, et serrée définitivement sur la structure dans cette position.

D'autres caractéristiques et avantages de la présente invention apparaîtront clairement à la lecture de la description suivante d'un mode de réalisation de celle-ci, en se reportant aux dessins annexés, sur les quels :
- la figure 1 mont re un exemple d'implantation du dispositif proposé, dans un carter de boîte de vitesses,
- la figure 2 montre, en coupe, la structure d'une douille utilisable comme système de roulement d'un arbre de boîte de vitesses,
- la figure 3 est une vue en perspective du dispositif proposé,
- la figure 4 est un agrandissement de la figure 1, et
- la figure 5 est une coupe selon A-A de la figure 4.

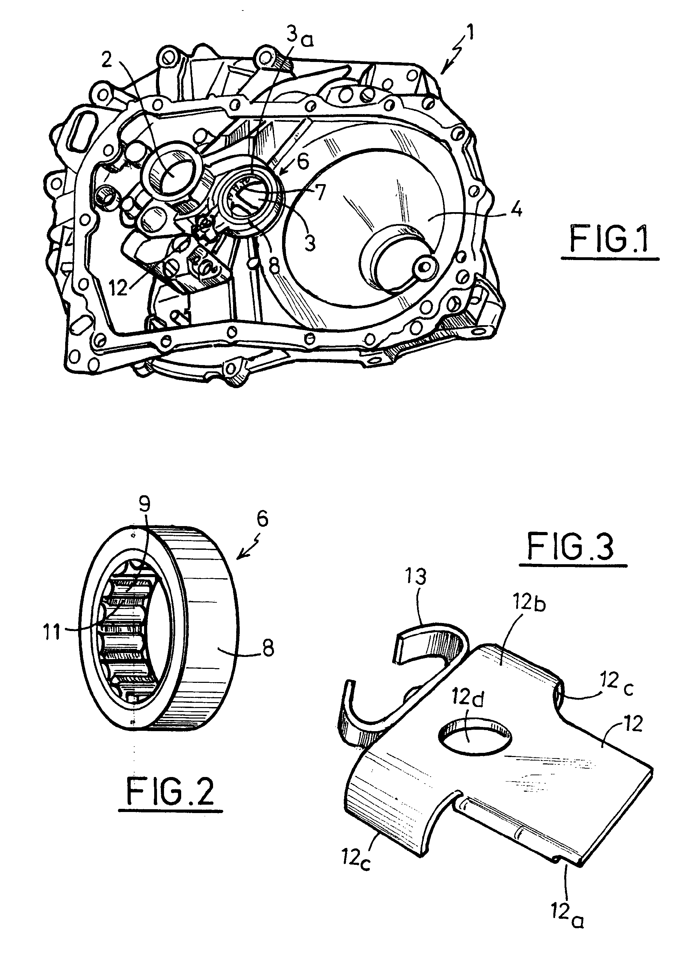

Sur la figure 1, on reconnaît un carter 1 d'embrayage et de différentiel de boîte de vitesses, et à l'intérieur de celui-ci les emplacements respectifs de la ligne primaire 2, de la ligne secondaire 3, et du différentiel 4. Le palier 3a de l'arbre secondaire renferme un système de roulement d'arbre 6, tel qu'une douille à rouleaux. L'élément d'arrêt 7, proposé par l'invention, est montré plus en détail sur les figures suivantes.

La douille à rouleaux 6 de la figure 2, comprend de façon classique une cage extérieure 8, par exemple en tôle roulée, des rouleaux 9, et une cage intérieure 11.

Le dispositif proposé 7 comprend de deux parties, à savoir une plaquette 12, et un ressort 13, fixé sur celle-ci. La plaquette 12 présente une zone de contact concave 12a, destinée à s'appuyer contre un système de roulement, tel que la douille à rouleaux 6 de la figure 2. Le ressort 13 est fixé sur le bord 12b de la plaquette, opposé à la zone de contact 12a. Enfin, la plaquette 12 présente deux ailes recourbées 12c facilitant son montage, et un orifice 12d pour la vis de serrage 19.

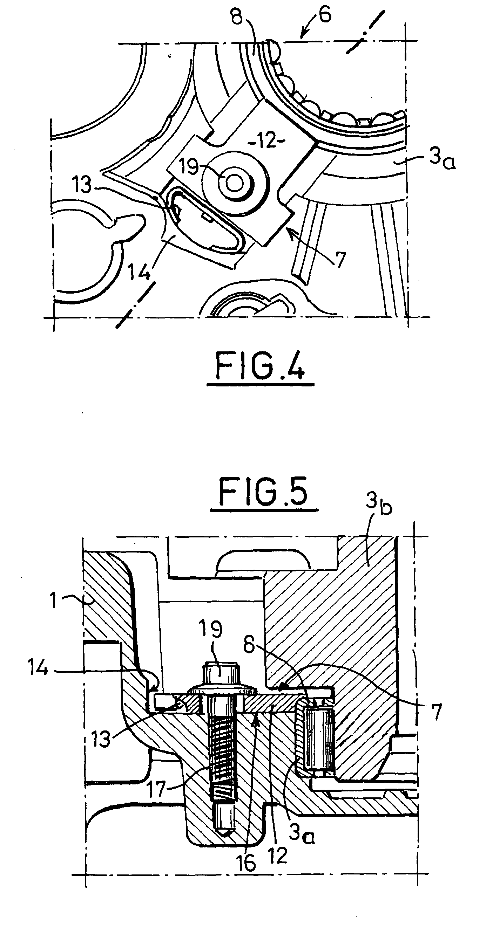

En se reportant aux figures 4 et 5, on voit comment le dispositif proposé permet d'arrêter axialement le système de roulement 6 d'un organe tournant, tel qu'un arbre 3b de boîte de vitesses. Le système de roulement 6 est logé dans le palier 3a, du carter 1. L'élément d'arrêt 7, composé de la plaquette 12 et du ressort 13, est en appui entre le système de roulement 6 et un épaulement 14 du carter 1. La plaquette 12 épouse, par son bord 12a, un rebord du système de roulement 6. Le carter présente un plan d'appui 16 pour la plaquette 12, et un trou de vissage 18, pour la vis 19.

Le ressort 13, qui est fixé sur la plaquette avant le montage, assure le plaquage de l'élément d'arrêt 7 contre le système de roulement 6, lors de son serrage définitif sur le carter 1, de sorte que l'élément d'arrêt 7 est vissé sur le carter 1 dans sa position d'appui contre la douille 6, sous la poussée du ressort 13.

En conclusion, lors du montage, on immobilise axialement le roulement dans son palier au moyen de la plaquette 12, qui est plaquée élastiquement par le ressort 13 contre le roulement 6, et serrée définitivement sur le carter 1 par vissage, dans cette position.

Dans le mode de réalisation de l'invention décrit ci-dessus, le système de roulement 6 est une douille à rouleaux comprenant une cage extérieure en tôle roulée. Toutefois, cet exemple de réalisation ne limite pas la portée de l'invention, qui s'applique dans les mêmes conditions, à d'autres types de roulements, à billes, aiguilles, rouleaux ou autres. Par ailleurs, son application n'est pas limitée aux roulements d'un arbre de boîte de vitesses, et on peut l'utiliser pour les roulements d'autres organes tournants dans des boîtiers ou autres structures rigides.

Ce dispositif a pour principal avantage, d'intégrer un moyen de plaquage qui assure son contact contre le système de roulement lors du serrage. Par ailleurs, son encombrement axial est limité, et les seules adaptations de structure nécessaires à son montage sont de prévoir un épaulement pour le ressort, ainsi qu'un plan d'appui et un trou de vissage pour la plaquette dans la masse du carter, ou de la structure de support.

## Revendications

1. Dispositif d'arrêt axial d'un système de roulement (6) d'un organe tournant (3b) dans une structure rigide (1), comprenant un élément d'arrêt (7) en appui entre le système de roulement (6) et un épaulement (14) de la structure (1), **caractérisé en ce que** l'élément d'arrêt (7) est composé d'une plaquette (12) en appui contre le système de roulement (6), et d'un ressort (13) fixé sur celle-ci, assurant son plaquage contre le système de roulement (6).

2. Dispositif d'arrêt selon la revendication 1, **caractérisé en ce que** le ressort (13) est en appui contre l'épaulement (14) de la structure (1).

3. Dispositif d'arrêt selon la revendication 2, **caractérisé en ce que** la plaquette (12) est immobilisée vis-à-vis de la structure (1) en position d'appui contre le système de roulement (6) sous la poussée du ressort (13).

4. Dispositif d'arrêt, selon l'une des revendications précédentes, **caractérisé en ce que** la plaquette (12) présente une zone de contact (12a) épousant un rebord du système de roulement (6).

5. Dispositif d'arrêt selon l'une des revendications 1 à 4, **caractérisé en ce que** la plaquette (12) présente un orifice de fixation (12d) traversé par une vis de serrage (19) sur la structure rigide (1).

6. Dispositif d'arrêt selon l'une des revendications précédentes, **caractérisé en ce que** le système de roulement (7) est une douille à rouleaux (9) comprenant une cage extérieure (8) en tôle roulée.

7. Procédé de montage de roulement dans un palier (3a) d'arbre tournant (3b) de boîte de vitesses, **caractérisé en ce qu'**on immobilise axialement le roulement dans son palier au moyen d'une plaquette d'arrêt (12) plaquée élastiquement par un ressort (13) contre la douille à rouleaux (6) et serrée définitivement sur le carter (1) de la boîte dans cette position.

8. Procédé de montage selon la revendication 7, **caractérisé en ce que** la plaquette (12) est vissée sur le carter (1) dans cette position.

9. Procédé de montage selon la revendication 7 ou 8, **caractérisé en ce que** le ressort (13) est fixé sur la plaquette (12), avant le montage de celle-ci dans la boîte.

## Claims

1. Axial restraint device for a rolling-element bearing system (6) for a revolving member (3b) in a rigid structure (1), comprising a restraint element (7) in compression between the rolling-element bearing system (6) and a shoulder (14) of the structure (1), **characterized in that** the restraint element (7) is composed of both a plate (12) pressed against the rolling-element bearing system (6), and a spring (13) fixed to said plate and holding it against the rolling-element bearing system (6).

2. Restraint device according to Claim 1, **characterized in that** the spring (13) is pressed against the shoulder (14) of the structure (1).

3. Restraint device according to Claim 2, **characterized in that** the plate (12) is immobilized relative to the structure (1) in a position in which it is pressed against the rolling-element bearing system (6) by the spring (13).

4. Restraint device according to one of the preceding claims, **characterized in that** the plate (12) has a contact region (12a) complementary to the shape of a flange of the rolling-element bearing system (6).

5. Restraint device according to one of Claims 1 to 4, **characterized in that** the plate (12) has a fixing orifice (12d) through which a bolt (19) is passed to clamp it to the rigid structure (1).

6. Restraint device according to one of the preceding claims, **characterized in that** the rolling-element bearing system (7) is a roller bush (9) comprising an outer cage (8) made of wrapped sheet metal.

7. Method for assembling a rolling-element bearing in a bearing housing (3a) of a revolving shaft (3b) of a gearbox, **characterized in that** the rolling-element bearing is immobilized axially in its bearing housing by means of a restraint plate (12) pressed elastically by a spring (13) against the roller bush (6) and clamped permanently to the gearbox case (1) in this position.

8. Assembly method according to Claim 7, **characterized in that** the plate (12) is screwed to the case (1) in this position.

9. Assembly method according to Claim 7 or 8, **characterized in that** the spring (13) is fixed to the plate (12) before the latter is assembled into the gearbox.

## Patentansprüche

1. Axialhaltevorrichtung für ein Wälzlagersystem (6) eines in einer starren Struktur (1) sich drehenden Organs (3b), mit einem Halteelement (7), das sich zwischen dem Wälzlagersystem (6) und einer Schulter (14) der Struktur (1) abstützt, **dadurch gekennzeichnet, dass** das Halteelement (7) aus einer Platte (12), die sich an dem Wälzlagersystem (6) abstützt, und einer Feder (13), die an ihr befestigt ist und sicherstellt, dass sie an dem Wälzlagersystem (6) anliegt, gebildet ist.

2. Haltevorrichtung nach Anspruch 1, **dadurch gekennzeichnet, dass** sich die Feder (13) an der Schulter (14) der Struktur (1) abstützt.

3. Haltevorrichtung nach Anspruch 2, **dadurch gekennzeichnet, dass** die Platte (12) gegenüber der Struktur (1) unter dem Schub der Feder (13) in der Abstützposition an dem Wälzlagersystem (6) unbeweglich ist.

4. Haltevorrichtung nach einem der vorhergehenden Ansprüche, **dadurch gekennzeichnet, dass** die Platte (12) eine Kontaktzone (12a) aufweist, die sich an eine Kante des Wälzlagersystems (6) anschmiegt.

5. Haltevorrichtung nach einem der Ansprüche 1 bis 4, **dadurch gekennzeichnet, dass** die Platte (12) eine Befestigungsöffnung (12d) aufweist, durch die eine Schraube (19) für die Festklemmung an der starren Struktur (1) verläuft.

6. Haltevorrichtung nach einem der vorhergehenden Ansprüche, **dadurch gekennzeichnet, dass** das Wälzlagersystem (7) ein Walzenring (9) ist, der einen äußeren Käfig (8) aus gewalztem Blech enthält.

7. Verfahren zum Montieren eines Wälzlagers in einem Wellenlager (3a) einer Drehwelle (3b) eines Schaltgetriebes, **dadurch gekennzeichnet, dass** das Wälzlager in seinem Lager mittels einer Halteplatte (12), die durch eine Feder (13) elastisch gegen den Walzenring (6) gedrückt wird und endgültig am Gehäuse (1) des Getriebes in dieser Position festgeklemmt wird, axial unbeweglich gemacht wird.

8. Montageverfahren nach Anspruch 7, **dadurch gekennzeichnet, dass** die Platte (12) an dem Gehäuse (1) in dieser Position festgeschraubt wird.

9. Montageverfahren nach Anspruch 7 oder 8, **dadurch gekennzeichnet, dass** die Feder (13) an der Platte (12) befestigt wird, bevor diese in dem Getriebe montiert wird.
